# EUROPÄISCHE PATENTANMELDUNG

(11) **EP 2 868 866 A1**
(43) Veröffentlichungstag der Anmeldung: **06.05.2015**
(21) Anmeldenummer: 13190983.0
(22) Anmeldetag: 31.10.2013
(51) Int. Cl.: F01D 5/08, F02C 9/18

(54) **Verdichter für eine Gasturbine mit einem inneren Temperaturausgleich**

(71) Anmelder: Siemens Aktiengesellschaft, 80333 München (DE)
(72) Erfinder: Braun, Stefan, 47506 Neukirchen-Vluyn (DE); Butzeck, Christopher, 45481 Mülheim (DE); Chlebowski, Matthias, 45473 Mülheim a. d. Ruhr (DE); Kampka, Kevin, 45478 Mülheim a. d. Ruhr (DE); Kleinenhammann, Matthias, 45128 Essen (DE); Klumpp, Stephan, Dr., 40822 Mettmann (DE); Kowalzik, Christian, 45276 Essen (DE); Kunze, Markus, 46569 Hünxe (DE); Müller, Dirk, 45470 Mülheim a.d.Ruhr (DE); Schröder, Peter, 45307 Essen (DE); Wagner, Michael, 46539 Dinslaken (DE); Waltke, Ulrich, Dr., 45468 Mülheim an der Ruhr (DE); Werner, Klaus, 47574 Goch (DE)

(57) **Zusammenfassung**

Die Erfindung betrifft eine Gasturbine (10) sowie ein Verfahren zur Herstellung einer Gasturbine (10) mit einem Gehäuse (1) und einem Verdichter (2), wobei der Verdichter (2) einen Rotor (3) mit mehreren Verdichterscheiben (4a, 4b) aufweist. Der Rotor (3) trägt die Verdichterscheiben (4a, 4b). Die in Strömungsrichtung eines Gases durch die Gasturbine (10) vorderen Verdichterscheiben (4a) sowie ein in dem Rotor (3) liegender Hohlraum (6) bilden einen Niedertemperaturbereich (14) des Verdichters (2). Die in Strömungsrichtung des Gases hinteren Verdichterscheiben (4b) des Verdichters (2) bilden einen Hochtemperaturbereich (16) des Verdichters (2) aus. Es sind Mittel zur Wärmeleitung (15,18) vorgesehen, welche thermische Energie aus dem Hochtemperaturbereich (16) des Verdichters (2) in den Niedertemperaturbereich (14) des Verdichters (2) leiten.

## Beschreibung

Die vorliegende Erfindung betrifft eine Gasturbine mit einer Kühlung von Verdichterstufen durch Energietransport innerhalb des Verdichters sowie ein Verfahren zur Herstellung einer solchen Gasturbine.

Der Wirkungsgrad einer Gasturbine hängt unter anderem von dem Druckverhältnis zwischen der Luft am Austritt des Verdichters und der dem Verdichter zugeführten Luft ab. Zur Steigerung des Wirkungsgrades wird daher angestrebt, ein hohes Verdichtungsdruckverhältnis zu realisieren. Dabei steigt der Druck und die Temperatur insbesondere im Bereich der Verdichterscheiben im hinteren Teil des Verdichters so weit an, dass diese nicht mehr mit kostengünstigen Materialien hergestellt werden können, sondern entweder teure, höherwertige Materialien wie Verdichterscheiben aus Inconel eingesetzt werden, Schutzschichten auf die Oberfläche der Verdichterscheiben aufgebracht werden oder zusätzliche Kühlmaßnahmen vorgesehen werden, um die thermische Belastung der Verdichterscheiben zu reduzieren. Aus der EP 2 159 377 A1 ist bekannt, Kühlkanäle in den Turbinenleitschaufeln einer Gasturbine vorzusehen, welche mit einem flüssigen Kühlmittel, beispielsweise Natrium, durchströmt werden. Für die Verdichterscheiben bedeutet eine solche Lösung entsprechend hohen Mehraufwand und deutlich höhere Kosten.

Aufgabe der Erfindung ist es, die Wärme im Bereich der hinteren Verdichterscheiben in kühlere Bereiche des Verdichters zu leiten, um die thermische Belastung der hinteren Verdichterscheiben zu senken.

Die erfindungsgemäße Gasturbine mit den Merkmalen des Anspruchs 1 bietet demgegenüber den Vorteil, dass über die Mittel zur Wärmeleitung ein einfacher und kostengünstiger Weg realisiert werden kann, um die thermische Energie aus den thermisch hoch belasteten Bereich des Verdichters in thermisch weniger stark belastete Bereiche zu leiten. Ein einfaches konstruktives Mittel zur Wärmeabfuhr ist ein Wärmerohr. Das Wärmerohr umfasst ein gekapseltes Volumen. Das gekapselte Volumen ist mit einem flüssigen Arbeitsmedium gefüllt, das bei Erwärmung im Betrieb des Wärmerohrs das gekapselte Volumen des Wärmerohrs zum Teil in flüssigem, zum anderen Teil in gasförmigem Aggregatzustand als Dampf ausfüllt. An dem Wärmerohr befinden sich je eine Wärmeübertragungsfläche für eine Wärmequelle und eine Wärmesenke. Das Wärmerohr zeichnet sich durch eine sehr hohe Wärmeleitfähigkeit aus und kann somit sehr effektiv die thermische Energie aus dem heißeren Bereich des Verdichters in kühlere Bereiche des Verdichters leiten.

Durch die in den abhängigen Ansprüchen angeführten Maßnahmen sind vorteilhafte Weiterbildungen und Verbesserungen der im unabhängigen Anspruch angegebenen Gasturbine möglich.

Eine vorteilhafte Weiterbildung besteht darin, dass das mindestens eine Wärmerohr in axialer Richtung zur Längsachse des Rotors durch die Verdichterscheiben des Verdichters verlegt ist. Bei einer axialen Verlegung des Wärmerohrs durch die Verdichterscheiben ist die Länge des Wärmerohrs innerhalb des Verdichters kaum begrenzt. Es kann so ein langes Wärmerohr eingesetzt werden, welches von den hinteren Verdichterscheiben bis zu den vorderen Verdichterscheiben führt und somit einen hohen thermischen Gradienten entlang des Verdichters überbrückt. Besonders vorteilhaft ist dabei, wenn das Wärmerohr durch Bohrungen in den Verdichterscheiben geführt ist. Bohrungen in den Verdichterscheiben sind leicht auszuführen. Das Wärmerohr kann einfach an den Verdichterscheiben fixiert werden und durch ein in axialer Richtung durch die Verdichterscheiben verlaufendes Wärmerohr entsteht ein verwindungssteifer Verbund, der die Stabilität des Verdichters erhöht. Eine alternative vorteilhafte Weiterbildung besteht darin, dass das mindestens eine Wärmerohr in radialer Richtung zur Längsachse des Rotors angeordnet ist. Dabei kann das Wärmerohr beispielsweise an einer Verdichterscheibe fixiert werden. Durch eine radiale Anordnung kann darauf verzichtet werden, Durchführungen, insbesondere Bohrungen, in die Verdichterscheiben einzubringen. Dadurch erfolgt keine Schwächung der Struktur der Verdichterscheiben. Besonders vorteilhaft ist dabei, wenn das mindestens eine Wärmerohr an seinem dem Rotor zugewandten Ende in den Hohlraum im Rotor des Verdichters mündet. Dadurch kann die thermische Energie im thermisch hoch belasteten Bereich der letzten Verdichterscheiben in den thermisch deutlich geringer belasteten Hohlraum im Inneren des Rotors geleitet werden.

Eine weitere vorteilhafte Weiterbildung besteht darin, dass das mindestens eine Wärmerohr in einem mittleren Abschnitt mit einer Isolation ummantelt ist. Durch eine Isolation wird eine Wärmeleitung vom Wärmerohr auf Verdichterscheiben, insbesondere in Kontaktbereichen von Bohrungen in den Verdichterscheiben, reduziert. Um den gewünschten Transfer von thermischer Energie aus einem Hochtemperaturbereich im Bereich der hinteren Verdichterscheiben in einen Niedertemperaturbereich der vorderen Verdichterscheiben zu realisieren, wird der mittlere Abschnitt des Wärmerohrs, zumindest abschnittsweise, insbesondere an den Kontaktstellen mit den Verdichterscheiben, mit einer Isolation ummantelt. Somit kann die thermische Energie effektiv über die gesamte Länge des Wärmerohrs abgeführt werden.

In einer vorteilhaften Weiterbildung ist vorgesehen, dass mehrere Wärmerohre vorhanden sind, wobei die mehreren Wärmerohre parallel zueinander angeordnet sind. Durch die parallele Anordnung mehrerer Wärmerohre wird die Effizienz des Abtransportes der thermischen Energie aus dem Hochtemperaturbereich des Verdichters gesteigert. Dabei erfolgt die Anordnung bevorzugt mit gleich großen Abständen zwischen den einzelnen Wärmerohren, entsprechend gleich großen Kreisabschnitten auf den Verdichterscheiben, beispielsweise je ein Wärmerohr an jedem zweiten Blatt einer Verdichterscheibe. Durch eine Vielzahl von Wärmerohren entsteht so ein in Bezug auf den Transport der thermischen Energie sehr effizienter und bezogen auf die Mechanik sehr stabiler Verbund von Verdichterscheiben und Wärmerohren.

Alternativ ist mit Vorteil vorgesehen, dass zumindest eins der mehreren Wärmerohre axial zur Längsachse und mindestens ein weiteres Wärmerohr radial zur Längsachse des Rotors angeordnet ist. Durch eine solche Anordnung lassen sich die Vorteile der radialen Anordnung mit der Abfuhr der thermischen Energie in das Innere des Rotors und der axialen Anordnung entlang des axialen Wärmerohrs verbinden.

Im Folgenden werden zwei Ausführungsbeispiele der erfindungsgemäßen Gasturbine anhand der beigefügten Zeichnungen erläutert. Gleiche Bauteile oder Bauteile mit gleicher Funktion sind dabei mit gleichen Bezugszeichen gekennzeichnet.
- FIG 1: zeigt ein erstes Ausführungsbeispiel einer erfindungsgemäßen Gasturbine.
- FIG 2: zeigt ein weiteres Ausführungsbeispiel einer erfindungsgemäßen Gasturbine.

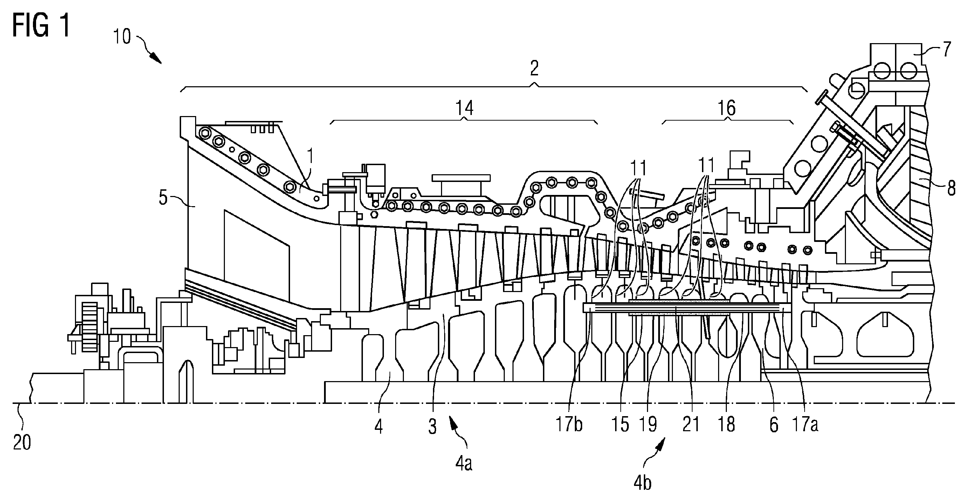

In FIG 1 ist ein Ausführungsbeispiel einer erfindungsgemäßen Gasturbine 10 dargestellt. Die Gasturbine 10 weist ein Gehäuse 1 auf, in dem ein Verdichter 2 angeordnet ist. Der Verdichter 2 umfasst einen Rotor 3, der mehrere Verdichterscheiben 4a, 4b trägt, wobei die Verdichterscheiben 4a, 4b am Rotor 3 fixiert sind. Das Gehäuse 1 weist ferner eine Einlassöffnung 5 auf und ist mit einem Gehäuse 7 einer Brennkammer 8 verbunden, wobei das Gehäuse 1 und das Gehäuse 7 der Brennkammer 8 auch einteilig ausgebildet sein können. In Strömungsrichtung eines Gases, insbesondere von Luft, durch den Verdichter 2, d.h. in Richtung von der Einlassöffnung 5 in Richtung der Brennkammer 8, durchströmt das Fluid zunächst einen Niedertemperaturbereich 14 des Verdichters 2, welcher die vorderen Verdichterscheiben 4a des Verdichters 2 sowie einen Hohlraum 6 im Rotor 3 umfasst. In Strömungsrichtung hinter dem Niedertemperaturbereich 14 schließt sich ein Hochtemperaturbereich 16 des Verdichters 2 an, welcher die hinteren Verdichterscheiben 4b des Verdichters 2 umfasst. An dem Verdichter 2 sind Mittel zur Wärmeleitung 15, in diesem Ausführungsbeispiel ein Wärmerohr 18, angeordnet, welche im Betrieb der Gasturbine 10 thermische Energie aus dem Hochtemperaturbereich 16 des Verdichters 2 in den Niedertemperaturbereich 14 des Verdichters 2 leiten. Dabei verläuft das Wärmerohr 18 in axialer Richtung, d.h. parallel zu einer Längsachse 20 durch den Rotor 3.

Das Wärmerohr 18 weist zwei Enden 17a, 17b auf, wobei das einer Wärmequelle zugewandte Ende 17a des Wärmerohrs 18 in den Hochtemperaturbereich 16 und das einer Wärmesenke zugewandte Ende 17b des Wärmerohrs in den Niedertemperaturbereich des Verdichters 2 mündet. Das Wärmerohr 18 weist ferner in einem mittleren Bereich 21 zwischen den beiden Enden 17a, 17b eine Isolation 19 auf, über welche das Wärmerohr 18 gegenüber den Verdichterscheiben 4a, 4b des Verdichters 2 thermisch isoliert. Während die beiden Enden 17a, 17b des Wärmerohrs 18 zur besseren Wärmeleitung nicht isoliert sind, kann die Isolation 19 im mittleren Bereich 21 dabei kontinuierlich verlaufen oder jeweils abschnittsweise nur an den jeweiligen Kontaktstellen zwischen dem Wärmerohr 18 und den Verdichterscheiben 4a, 4b aufgebracht sein. Das Wärmerohr 18 wird durch Bohrungen 11 in den Verdichterscheiben 4a, 4b geführt, durch welche das Wärmerohr 18 bei der Montage des Verdichters 2 gesteckt wird.

Im Betrieb der Gasturbine 10 wird ein Gas durch die Einlassöffnung 5 angesaugt und über die Verdichterscheiben 4a, 4b des Verdichters 2 verdichtet. Der Verdichtungsprozess führt dazu, dass sich die Verdichterscheiben 4a, 4b aufgrund der erhöhten Gastemperatur erwärmen. Im Laufe des Verdichtungsprozesses erhöht sich die Temperatur des Gases, wodurch sich die thermische Belastung auf die hinteren Verdichterscheiben 4b, insbesondere auf die letzte Verdichterscheibe 4b vor Eintritt des Gases in die Brennkammer 8 erhöht. Um die thermische Belastung im Bereich der hinteren Verdichterscheiben 4b zu reduzieren, wird ein Teil der thermischen Energie der Verdichterscheiben 4b über das der Wärmequelle zugewandte Ende 17a des Wärmerohrs 18 aufgenommen und über das Wärmerohr 18 an das der Wärmesenke zugewandte Ende 17b des Wärmerohrs 18 an die Verdichterscheiben 4a geleitet und an eine oder mehrere Verdichterscheiben 4a im Niedertemperatur 14 des Verdichters 2 abgegeben. Das Gehäuse des Wärmerohrs 18 besteht dabei üblicherweise aus einem Metall mit hoher Wärmeleitfähigkeit, beispielsweise Kupfer oder Aluminium. Das Wärmerohr 18 weist ein gekapseltes Volumen auf, welches mit einem Arbeitsmedium, beispielsweise Wasser, gefüllt ist, welches im Betrieb zu einem Teil in flüssigem und zum anderen Teil in gasförmigem Zustand vorliegt. Dabei verdampft das Arbeitsmedium im Bereich des der Wärmequelle zugewandten Endes 17a und strömt durch das Wärmerohr 18 an das der Wärmesenke zugewandte Ende 17b. An der Wärmesenke kondensiert das Arbeitsmedium und gibt somit seine thermische Energie ab. Durch Kapillarwirkung wird das kondensierte Arbeitsmedium wieder in Richtung des der Wärmequelle zugewandten Endes 17a des Wärmerohrs gefördert.

Alternativ können auch mehr als ein Wärmerohr 18 vorgesehen sein, beispielsweise mehrere Wärmerohre 18, welche über den Umfang der Verdichterscheiben 4a, 4b, bevorzugt in gleichmäßigen Abständen, verteilt sind. Dabei kann beispielsweise jedes zweite Blatt einer Verdichterscheibe 4a, 4b ein Wärmerohr 18 tragen, es sind jedoch auch größere Abstände möglich.

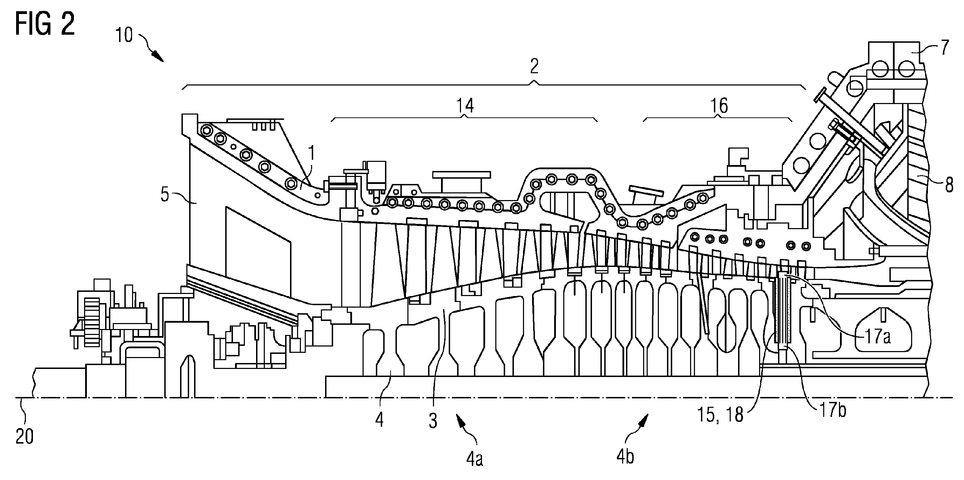

In FIG 2 ist ein alternatives Ausführungsbeispiel einer erfindungsgemäßen Gasturbine 10 dargestellt. Bei weitestgehend gleichem Aufbau wird im Folgenden nur auf die Unterschiede zum Ausführungsbeispiel gemäß FIG 1 eingegangen.

Die erfindungsgemäße Gasturbine 10 gemäß FIG 2 weist ein Wärmerohr 18 auf, welches in radialer Richtung zur Längsachse 20 des Rotors 3 angeordnet ist. Das Wärmerohr 18 verläuft parallel zu den Verdichterscheiben 4b, wobei das Wärmerohr 18 insbesondere auch an einer Verdichterscheibe 4b fixiert ist. Das der Wärmequelle zugewandte Ende 17a des Wärmerohrs 18 ist dabei in etwa im Bereich eines Außendurchmessers der Verdichterscheibe angeordnet, während das der Wärmesenke zugewandte Ende 17b in den Hohlraum 6 im Inneren des Rotors 3 mündet. Dabei ist das Wärmerohr 18, insbesondere das der Wärmesenke zugewandte Ende 17b mit dem Rotor 3 verbunden, um die Wärmeleitung in den Hohlraum 6 zu verbessern und/oder das Wärmerohr 18 zu fixieren.

In einer weiteren Ausführungsform können auch mehrere Wärmerohre 18 vorhanden sein, von denen zumindest ein Wärmerohr 18 axial, d.h. parallel zur Längsachse 20 des Rotors 3 und mindestens ein weiteres Wärmerohr 18 radial zur Längsachse 20 des Rotors angeordnet ist. Dabei ist das mindestens eine Wärmerohr 18 radial zur Längsachse 20 des Rotors 3 in Strömungsrichtung des Gases durch den Verdichter 2 hinter dem mindestens einen axialen Wärmerohr 18 angeordnet. Auf diese Weise kann thermische Energie aus dem Hochtemperaturbereich 16 sowohl in den Hohlraum 6 im Rotor 3 als auch zu den vorderen Verdichterscheiben 4a geleitet werden.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Gasturbine (10) mit einem Gehäuse (1) und einem Verdichter (2),
wobei der Verdichter (2) einen Rotor (3) mit mehreren Verdichterscheiben (4a, 4b) aufweist,
wobei der Rotor (3) die Verdichterscheiben (4a, 4b) trägt, und
wobei die in Strömungsrichtung eines Gases durch die Gasturbine (10) vorderen Verdichterscheiben (4a) und ein in dem Rotor (3) liegender Hohlraum (6) einen Niedertemperaturbereich (14) des Verdichters (2) ausbilden, und die in Strömungsrichtung des Gases hinteren Verdichterscheiben (4b) einen Hochtemperaturbereich (16) des Verdichters (2) ausbilden,
**dadurch gekennzeichnet,**
**dass** Mittel zur Wärmeleitung (15, 18) vorgesehen sind, welche thermische Energie aus dem Hochtemperaturbereich (16) des Verdichters (2) in den Niedertemperaturbereich (14) des Verdichters (2) leiten.

2. Gasturbine (10) nach Anspruch 1,
**dadurch gekennzeichnet, dass**
die Mittel zur Wärmeleitung (15) mindestens ein Wärmerohr (18) umfassen.

3. Gasturbine (10) nach Anspruch 2,
**dadurch gekennzeichnet, dass**
das mindestens eine Wärmerohr (18) axial zum Rotor (3), insbesondere durch Bohrungen in den Verdichterscheiben (4a, 4b) des Verdichters (2), verlegt ist.

4. Gasturbine (10) nach Anspruch 2,
**dadurch gekennzeichnet, dass**
das mindestens eine Wärmerohr (18) in radialer Richtung zur Längsachse (20) des Rotors (3) angeordnet ist, wobei das mindestens eine Wärmerohr (18) an seinem dem Rotor zugewandten Ende (19) in den Hohlraum (6) im Rotor (3) des Verdichters (2) mündet.

5. Gasturbine (10) nach Anspruch 2,
**dadurch gekennzeichnet, dass**
das mindestens eine Wärmerohr (18) gebogen ausgeführt ist, wobei ein Transport der thermischen Energie sowohl in axialer Richtung zur Längsachse (20) des Rotors (3) als auch in radialer Richtung zur Längsachse (20) der Rotors (3) erfolgt.

6. Gasturbine (10) nach einem der Ansprüche 2 bis 5,
**dadurch gekennzeichnet, dass**
das mindestens eine Wärmerohr zumindest abschnittsweise mit einer Isolation (19) ummantelt ist.

7. Gasturbine (10) nach einem der Ansprüche 2 bis 6,
**dadurch gekennzeichnet,**
**dass** mehrere Wärmerohre (18) vorhanden sind.

8. Gasturbine (10) nach Anspruch 7,
**dadurch gekennzeichnet,**
**dass** die mehreren Wärmerohre (18) parallel zueinander angeordnet sind.

9. Gasturbine (10) nach Anspruch 7,
**dadurch gekennzeichnet, dass**
zumindest eins der mehreren Wärmerohre (18) axial zur Längsachse (20) des Rotors (3) und mindestens ein weiteres der mehreren Wärmerohr (18) radial zur Längsachse (20) des Rotors (3) angeordnet ist.

10. Verdichter (2) für eine Gasturbine, mit einem Gehäuse (1),
wobei der Verdichter (2) einen Rotor (3) mit mehreren Verdichterscheiben (4a, 4b) aufweist,
wobei der Rotor (3) die Verdichterscheiben (4a, 4b) trägt, und
wobei die in Strömungsrichtung eines Gases durch den Verdichter (2) vorderen Verdichterscheiben (4a) und ein im Rotor (3) liegender Hohlraum (6) einen Niedertemperaturbereich (14) des Verdichters (2) ausbilden, und die in Strömungsrichtung des Gases hinteren Verdichterscheiben (4b) einen Hochtemperaturbereich (16) des Verdichters (2) ausbilden,
**dadurch gekennzeichnet,**
**dass** Mittel (15, 18) vorgesehen sind, welche thermische Energie aus dem Hochtemperaturbereich (16) des Verdichters (2) in den Niedertemperaturbereich (14) des Verdichters (2) leiten.

11. Verfahren zur Herstellung einer Gasturbine (10), mit einem Gehäuse (1) und einem Verdichter (2),
wobei der Verdichter (2) einen Rotor (3) und mehrere Verdichterscheiben (4a, 4b) umfasst,
wobei der Rotor (3) die Verdichterscheiben (4a, 4b) trägt, und wobei die in Strömungsrichtung eines Gases durch die Gasturbine (10) vorderen Verdichterscheiben (4a) und ein in dem Rotor (3) liegender Hohlraum (6) einen Niedertemperaturbereich (14) des Verdichters (2) ausbilden, und die in Strömungsrichtung des Gases hinteren Verdichterscheiben (4b) einen Hochtemperaturbereich (16) des Verdichters (2) ausbilden,
**dadurch gekennzeichnet, dass**
an dem Verdichter (2) Mittel zur Wärmeleitung (15,18) angeordnet werden, welche thermische Energie aus dem Hochtemperaturbereich (16) des Verdichters (2) in den Niedertemperaturbereich (14) des Verdichters (2) leiten.
